# EUROPEAN PATENT SPECIFICATION

(11) **EP 4 378 675 B1**
(45) Date of publication and mention of the grant of the patent: **01.10.2025**
(21) Application number: 23212117.8
(22) Date of filing: 24.11.2023
(51) Int. Cl.: B29D 30/06

(54) **MOLD FOR PRODUCING ANNULAR RUBBER COMPONENT**
FORM ZUR HERSTELLUNG EINER RINGFÖRMIGEN GUMMIKOMPONENTE
MOULE POUR LA PRODUCTION D'UN COMPOSANT ANNULAIRE EN CAOUTCHOUC

(30) Priority: 30.11.2022 US 202218060034
(43) Date of publication of application: 05.06.2024
(73) Proprietor: The Goodyear Tire & Rubber Company, Akron, OH 44316 (US)
(72) Inventor: PIERRE, Christophe Jean Alexis Ghislain, 6790 Aubange (BE); PENIDE, Antoine Charles, L-7540 Rollingen (LU); YOUJIL, Mohamed Hicham, B-6662 Houffalize (BE); SPORTELLI, Francesco, 3249 Bettembourg (LU); SKA, Jean-Philippe Louis Joseph, B-6680 Sainte-Ode (BE); LANZALACO, Vincenzo, 54294 Trier (DE); COURTOY, Pierre, B-4920 Aywaille (BE)
(74) Representative: Kutsch, Bernd

(56) References cited:
- EP-A2- 1 520 674
- JP-A- H07 144 375
- US-A- 4 207 052

## Description

### Field of the Invention

The present invention generally relates to a mold mechanism for curing/producing an annular rubber structure, in particular to a mold a tire or a tire part, and to a method and apparatus or mold container associated therewith, and more particularly, to a mold for the production of a non-pneumatic tire (NPT).

### Background of the Invention

Conventional, pneumatic tires have long been manufactured by vulcanization within a tire mold. US 4,957,656 describes a two-piece tire mold featuring various seals and pressurized compartments. GB 830,231 describes another two-piece tire mold utilizing a vacuum.

Another form of tire mold is the segmented tire mold, as opposed to a two-piece tire mold. Examples of segmented tire molds are described in US 3,779,677 and US 3,867,504.

US 3,779,677 discloses a tire mold in which tread mold segments are moved radially by a coned ring between sidewall plates which bear against the moving segments. Link means connecting each segment to the upper plate enable the segments to be retracted into the ring by moving the upper plate. The link means provides sufficient relative separation between the upper plate and the segments to prevent friction, wear, and binding therebetween during such retraction. The tire mold includes a pair of sidewall mold plates, each of which carries a tire sidewall molding surface. A plurality of tread mold segments collectively cooperate with the sidewall molding surfaces to form a closed tire molding cavity. The tread mold segments are mounted respectively on a plurality of carrier segments which are movable inwardly and outwardly with respect to the tire mold axis and particularly radially thereof. Each of the carrier segments is provided with an inclined surface, as well as guiding surfaces (e.g., a T-slot). The respective inclined surfaces cooperate with conjugately inclined surfaces carried by the closing ring and define collectively cones convergent on the mold axis outwardly, i.e., upwardly, of the upper platen. Radial movement of the respective segments inwardly, toward the axis, is effected by axial movement of the ring toward the lower sidewall plate. As the upper platen and ring move downwardly, engagement of the bottom surface of the segment with the flange surface of the lower sidewall plate prevents further axial movement of the segment, thereby converting the relative motion between the ring and the segment to radially inward movement of the segment. Similarly, axial movement of the ring upwardly relative to the segment, which is then being prevented from moving axially by the upper sidewall mold plate causes the segment to move radially outwardly.
US 5,585,064 discloses a ventless segmented tire mold.

The pneumatic tire has been the solution of choice for vehicular mobility for over a century and is still dominant on the tire market today. Pneumatic tires are efficient at carrying loads because all of their structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid (e.g., air or an inert gas). A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. So-called "bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

A shear band may be provided to transfer the load from contact with the ground through tension in the connecting structure (including, e.g., spokes or a connecting web) to the hub, creating a top loading structure. When such a shear band deforms, its preferred form of deformation is shear over bending. The shear mode of deformation may occur because of inextensible membranes located on the radially inner and the radially outer portions of the shear band. Non-pneumatic tires may have a shear band made from a shear layer sandwiched between at least two layers of inextensible belts or membranes.

When a pneumatic tire is cured in its mold, the tire interior is pressurized by an inflatable bladder, which urges the uncured tire against the different parts of the mold, such as, e.g., the upper and lower sidewall plates and the tread mold segments. It has been tried to cure the shear band and the tread of a NPT in a similar way, but initial results were not convincing. In order to support the radially inner surface of the shear band, it was thus proposed to use a segmented inner mold, with mold segments that move radially, inwardly, or outwardly, in response to vertical movement of a conical actuating ring linked to the mold segments along respective sloped slides.
CN 107972234 A discloses an injection molding die for a solid tire. The injection molding die comprises an upper die, a lower die, an inner die, and a taper die. The upper die comprises an upper die body and an upper tire side plate, and the lower die comprises a lower die body and a lower tire side plate. First inner modules and second inner modules of the inner die are alternately distributed around the taper die in sequence, and are driven by a first guide block and a second guide block which are arranged on the taper die to be connected and guided. The first inner modules are provided with symmetrical inclined planes which face the opening direction of the inner die, and the second inner modules are provided with symmetric inclined planes which face the retracting direction of the inner die. The first and second inner modules are actuated by means of a conical center mechanism, which pushes the first and second inner modules radially outward when it is moved in the direction of the taper and pulls the first and second inner modules inward when it is moved in the direction opposite to the taper.

EP 1 520 674 A2 describes an inner mold mechanism in accordance with the preamble of claim 1.

### Summary of the Invention

The invention relates to an inner mold mechanism in accordance with claim 1, and to a tire mold in accordance with claim 8.

Dependent claims refer to preferred embodiments of the invention.

An inner mold mechanism for molding an annular structure is proposed. The inner mold mechanism comprises first inner mold segments and second inner mold segments, the first and second inner mold segments alternating with each other about a mold axis; a first axially movable actuator, the first actuator being mechanically connected to the first inner mold segments so as to move the first inner mold segments radially when the first actuator is moved axially; a second axially movable actuator, the second actuator being mechanically connected to the second inner mold segments so as to move the second inner mold segments radially when the first actuator is moved axially.

According to preferred embodiments, each one of the first inner mold segments may comprise a radially inner stem and a radially outer front body with an arced front surface. The front body may have flanges protruding in azimuthal direction beyond the stem so as to define recesses between the stem and the flanges.

According to preferred embodiments, each one of the second inner mold segments may comprise a radially inner stem and a radially outer front body with an arced front surface. The front body of each second inner mold second may have flanges protruding in azimuthal direction beyond the stem so as to define recesses between the stem and the flanges.

The flanges of the first inner mold segments and the flanges of the second inner mold segments may be shaped complementarily along the flange edges.

Each one of the first and each of the second inner mold segments is mechanically constrained to travel in axial direction.

According to preferred embodiments, the first actuator may be connected to the first inner mold segments by respective first prismatic joints and the second actuator may be connected to the second inner mold segments by respective second prismatic joints. The first and second prismatic joints may comprise a guide rail and a T-shaped slider sliding in the guide rail.

The first inner mold segments may be configured movable between two extremal positions, a first retracted position and a first deployed position. Likewise, the second inner mold segments may be configured movable between two extremal positions, a second retracted position and a second deployed position. When the first inner mold segments are in the first deployed position and the second inner mold segments are in the second deployed position, the first and second inner mold segments may form together a substantially continuous inner mold surface.

The first inner mold segments may have sides with recesses therein. When the first inner mold segments are in the first retracted position and the second inner mold segments are in the second retracted position, the second inner mold segments may be further retracted than the first inner mold segments and the second inner mold segments may be lodged at least partially in the recesses in the sides of the first inner mold segments.

The inner mold mechanism may comprise an equal number of first and second inner mold segments. The inner mold mechanism could comprise, e.g., from two to eight, preferably from three to five, first inner mold segments and the same number of second inner mold segments.

The first actuator may be connected to the first inner mold segments by respective first prismatic joints and the second actuator may be connected to the second inner mold segments by respective second prismatic joints. The first and second prismatic joints may comprise a guide rail and a T-shaped slider sliding in the guide rail.

### Definitions

As used herein, the term "rubber" is intended to include both natural rubber compositions and synthetic rubber compositions. Depending on context, "rubber" may designate a cured rubber (typically obtained from unsaturated rubber by sulfur or non-sulfur vulcanization), green rubber or partially cured rubber, i.e., rubber wherein the molecular chains contain residual cure sites (e.g., allylic positions) available for crosslinking with other molecular chains. Rubber compositions may include e.g., reinforcing fillers, such as carbon black, precipitated amorphous silica, or the like. Specific examples of rubbers include neoprene (polychloroprene), polybutadiene (e.g., cis-1,4-polybutadiene), polyisoprene (e.g., cis-1,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile, and methyl methacrylate. Other types of rubber include carboxylated rubber, silicon-coupled rubber, or tin-coupled star-branched polymers.

The expressions "axial" and "axially" are used herein to refer to lines or directions that are parallel to the axis of rotation of the tire and thus also parallel to the central axis of the tire mold.

The expressions "radial" and "radially" are used to mean the direction of a line intersecting the tire's axis or the mold's axis of rotation at right angle.

The expression "azimuthal" or "circumferential" refers to a direction that is perpendicular to both the radial and axial directions in the location under consideration. Instead of "azimuthal," the word "angular" or "circumferential" may be used.

In the present document, the verb "to comprise" and the expression "to be comprised of" are used as open transitional phrases meaning "to include" or "to consist at least of." Unless otherwise implied by context, the use of singular word form is intended to encompass the plural, except when the cardinal number "one" is used: "one" herein means "exactly one." Ordinal numbers ("first," "second," etc.) are used herein to differentiate between different instances of an object of the same kind; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment," "one embodiment," "embodiments," etc., this means that these embodiments may be combined with one another, across all aspects of the invention. Furthermore, the features of those embodiments can be used in the combination explicitly presented but also that the features can be combined across embodiments without departing from the invention, unless it follows from context that features cannot be combined.

### Brief Description of the Drawings

The invention will be described by way of example and with reference to the accompanying drawings in which:
FIG. 1 is a partial schematic cross-section through an axial plane of a mold for an annular structure, such as, e.g., the shear band or other annular band of a non-pneumatic tire, the mold comprising an inner mold mechanism shown in a deployed position;
FIG. 2 is the cross-section of FIG. 1 with the inner mold mechanism in a retracted position;
FIG. 3 is a horizontal cross-sectional view of the first and second inner mold segments of the inner mold mechanism in a deployed position; and
FIG. 4 is a horizontal cross-sectional view of the first and second inner mold segments of the inner mold mechanism in a retracted position.

### Detailed Description of Preferred Embodiments of the Invention

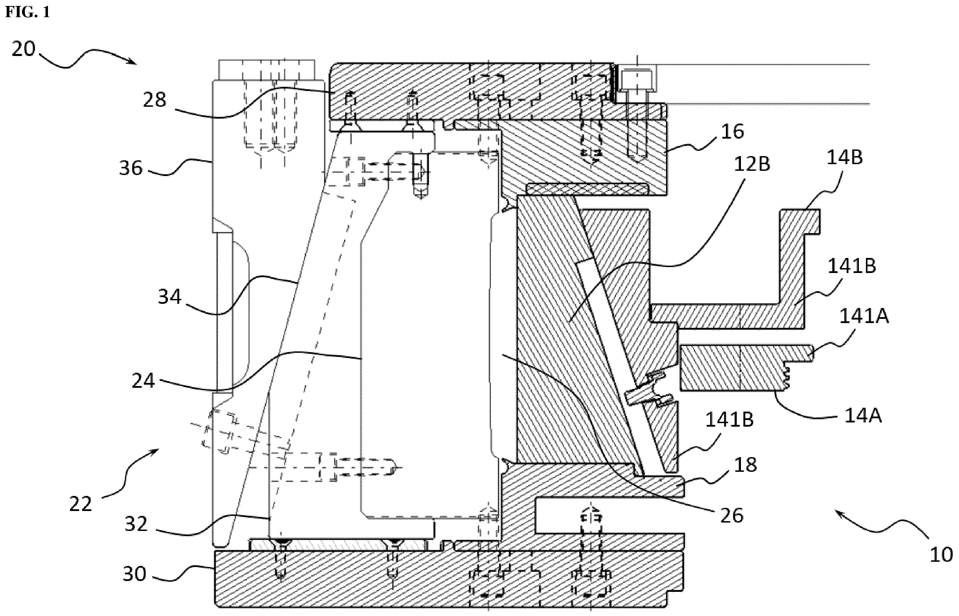

Figs. 1 to 4 illustrate an inner mold mechanism 10 for molding an annular structure in accordance with an embodiment of the invention as well as a mold 20 featuring such an inner mold mechanism 10.

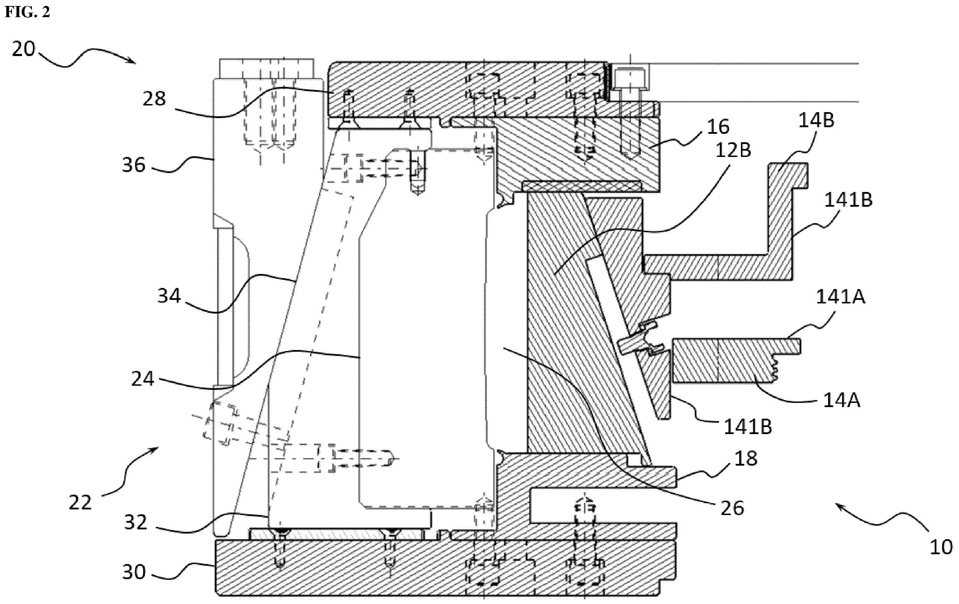

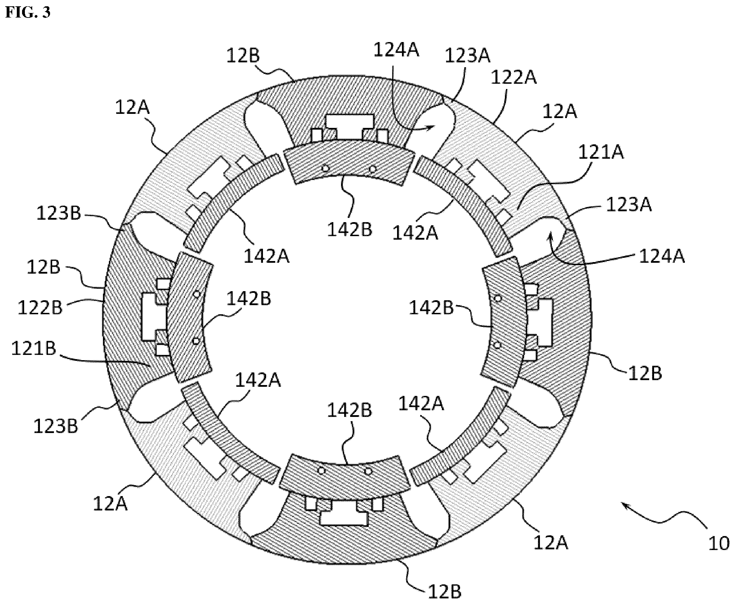

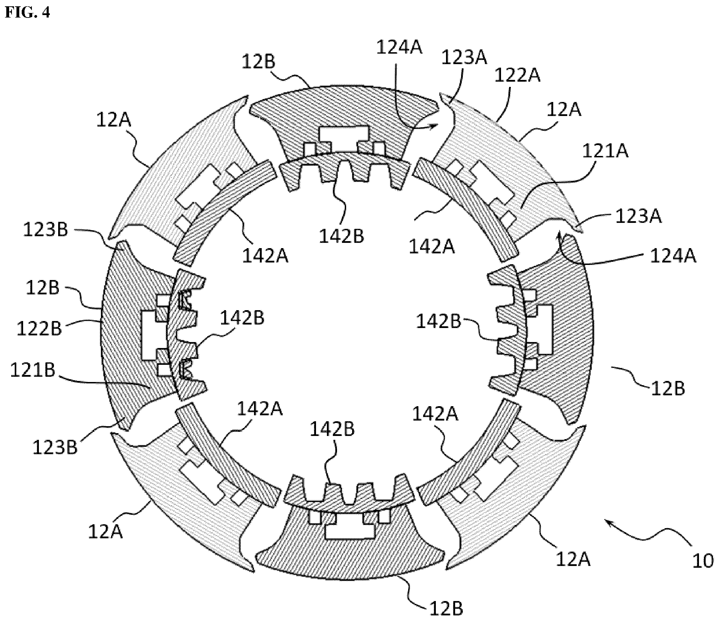

As can be best seen in Fig. 3 and Fig. 4, the inner mold mechanism 10 comprises first inner mold segments 12A and second inner mold segments 12B arranged circumferentially about the mold axis. The first and second inner mold segments 12A, 12B alternate about the mold axis. As best shown in Fig. 1 and Fig. 2, the inner mold mechanism 10 comprises a first axially movable actuator 14A, and a second axially movable actuator 14B. The first actuator 14A is mechanically connected to the first inner mold segments 12A so as to move them radially when it is moved axially itself. The second actuator 14B is mechanically connected to the second inner mold segments so as to move the second inner mold segments radially when it is moved axially.

The first actuator 14A includes a central portion 141A and a plurality of peripheral segment portions 142A (see Figs. 3 and 4). The peripheral segment portions 142A cooperate with the first inner mold segments 12A. The central portion 141A links the peripheral segment portions 142A to a first axial piston (not shown), which may be controlled hydraulically, pneumatically, or otherwise to move in axial direction. The peripheral segment portions 142A of the first actuator 14A have slanted radially outer surfaces, which cooperate with conjugately slanted radially inner surfaces of the first inner mold segments 12A. The peripheral segment portions 142A and the first inner mold segments 12A may additionally be coupled by a prismatic joint, e.g., comprising a T-shaped groove cooperating with a T-shaped slider. The inner mold segments 12A are prevented from moving axially, e.g., by first and second sidewall rings 16, 18, but may slide in radial direction. The slanted radially outer surfaces of the peripheral segment portions 142A lie generally on an imaginary right circular cone, the axis of which coincides with the axis of the mold. When the first actuator 14A is moved in the direction towards the apex of the cone (downwardly in Fig. 1), the peripheral segment portions 142A force the inner mold segments 12A to move radially outwardly. Conversely, when the first actuator 14A is moved in the direction away from the apex of the cone (upwardly in Fig. 1), the peripheral segment portions 142A force the inner mold segments 12A to move radially inwardly.

The second actuator 14B also includes a central portion 141B and a plurality of peripheral segment portions 142B, which cooperate with the second inner mold segments 12B. The central portion 141B links the peripheral segment portions 142B to a second axial piston (not shown), e.g., arranged concentrically with the first axial piston, which may be controlled hydraulically, pneumatically, or otherwise to move in axial direction. The peripheral segment portions 142B of the second actuator 14B have slanted radially outer surfaces, which cooperate with conjugately slanted radially inner surfaces of the second inner mold segments 12B. The peripheral segment portions 142B and the second inner mold segments 12B may additionally be coupled by a prismatic joint, e.g., comprising a T-shaped groove cooperating with a T-shaped slider. The inner mold segments 12B are prevented from moving axially, e.g., by the first and second sidewall rings 16, 18, but may slide in radial direction. The slanted radially outer surfaces of the peripheral segment portions 142B lie generally on a second imaginary right circular cone, the axis of which coincides with the axis of the mold. When the second actuator 14B is moved in the direction towards the apex of the second cone (downwardly in Fig. 1), the peripheral segment portions 142B force the inner mold segments 12B to move radially outwardly. Conversely, when the second actuator 14B is moved in the direction away from the apex of the cone (upwardly in Fig. 1), the peripheral segment portions 142B force the inner mold segments 12B to move radially inwardly.

The slanted surfaces of the peripheral segment portions 142B (or the second inner mold segments 12B) may have the same angle with respect to the axial direction as the slanted peripheral segment portions 142A (or the first inner mold segments 12A). However, the slant angle may also be different.

The inner mold mechanism 10 defines radially outward part of the mold 20. The radially outward part of the mold 20 may be provided by an outer mold ring or by a segmented outer mold mechanism 22, which may be configured, e.g., like the ones known from US 3,779,677 or EP 0 701 894 A2.

The inner mold segments 12A, 12B and the outer mold segments 24 delimit the mold cavity 26 in radial direction. The first and second sidewall rings 16, 18 delimit the mold cavity 26 in the axial direction. The first and second sidewall rings 16, 18 are mounted on first and second container plates 28, 30 respectively.

The outer mold segments 24 may be mounted respectively on carrier segments 32 which are movable radially inwardly and outwardly. Each of the carrier segments 32 is provided with an inclined surface 34, as well as guiding surfaces (e.g., a T-slot). The respective inclined surfaces cooperate with conjugately inclined surfaces carried by a closing ring 36. The carrier segments 32 are mounted on the container plates 28, 30 so as to be constrained in axial direction but movable radially. Radial movement of the carrier segments 32 and the outer mold segments 24 is effected by axial movement of the closing ring 36.

The inner and outer mold mechanisms are similar in the way they convert axial motion of an actuator into radial motion of the mold segments. However, unlike the outer mold segments 24, the inner mold segments 12A, 12B cannot be moved completely synchronously, as the inner mold segments would mutually block each other. Therefore, the first and second actuators 14A, 14B may be provided to move the first inner mold segments 12A separately from the second inner mold segments 12B.

Each one of the first inner mold segments 12A comprises a radially inner stem 121A and a radially outer front body with an arced front surface 122A. The front body has flanges 123A protruding in azimuthal direction beyond the stem 121A so as to define recesses 124A between the stem 121A and the flanges 123A.

Each one of the second inner mold segments 12B comprises a radially inner stem 121B and a radially outer front body with an arced front surface 122B. The front body of each second inner mold segment 12B may have flanges 123B protruding in azimuthal direction beyond the stem 121B so as to define recesses between the stem 121B and the flanges 123B.

The first inner mold segments 12A may be moved by the first actuator 14A between a first retracted position (see Fig. 2) and a first deployed position (see Fig. 1). Likewise, the second inner mold segments 12B may be moved by the second actuator 14B between a second retracted position (see Fig. 4) and a second deployed position (see Fig. 3). The first and second deployed positions of the first and second inner mold segments 12A, 12B correspond to the outwardly extremal positions of the first and second inner mold segments 12A, 12B, respectively.

When the first inner mold segments 12A are in the first deployed position and the second inner mold segments 12B are in the second deployed position, the arced front surfaces 122A, 122B of the first and second inner mold segments 12A, 12B form together the radially inner surface of the mold cavity 26. It may be noted that the flanges 123A of the first inner mold segments 12A and the flanges 123B of the second inner mold segments 12B are preferably shaped complementarily along their flange edges so as to achieve a tight fit and a substantially smooth radially inner surface of the mold cavity 26, when the first and second inner mold segments 12A, 12B are in their deployed positions.

When the first inner mold segments 12A are in the first retracted position and the second inner mold segments 12B are in the second retracted position, the second inner mold segments are further retracted than the first inner mold segments (see Fig. 4) and the second inner mold segments are lodged at least partially in the recesses 124A of the first inner mold segments 12A.

It may be worthwhile noting that an inner mold mechanism as proposed herein may greatly facilitate and or improve the curing of annular rubber structures. The inner mold mechanism may, in particular, help to homogeneously apply pressure from the radially interior side of the mold to the item being cured. This is particularly interesting for the curing radially thin annular structures, such as, e.g., shear bands for non-pneumatic tires.

The annular structure to be cured may be placed around the inner mold mechanism while the mold is open and the inner mold segments 12A, 12B are in the respective retracted positions. The mold is then closed and the inner mold segments 12A, 12B are brought into their respective deployed positions: the first inner mold segments 12A are deployed first by controlling the first actuator 14A, then the second inner mold segments are deployed by controlling the second actuator 14B. When the mold is closed, the curing of the annular structure may be carried out. After the curing, the mold is opened, the inner mold segments 12A, 12B are brought to their respective retracted positions and the cured annular structure may be removed from the mold.

It should be noted that the movement of the first and second inner mold segments 12A, 12B may be carried out with a temporal overlap (at least partly in parallel). What is important is that interference between the first and second inner mold segments 12A, 12B is avoided during deployment and retraction. This can be achieved by using separate actuators 14A, 14B and appropriate control thereof. Alternatively, actuation of the first and second inner mold segments 12A, 12B could be combined. In this case, differential deployment, and retraction of the first and second inner mold segments 12A, 12B could be achieved through different kinematic chains linking a common actuator to the first and second inner mold segments 12A, 12B, respectively.

## Claims

1. An inner mold mechanism for molding an annular structure such as a tire, the inner mold mechanism comprising: first inner mold segments (12A) and second inner mold segments (12B), the first and second inner mold segments being arranged circumferentially and alternating with each other circumferentially about an axis of the inner mold mechanism; a first axially movable actuator (14A), the first actuator (14A) being mechanically connected to the first inner mold segments (12A) or configured so as to move the first inner mold segments (12A) radially with respect to the axis when the first actuator (14A) is moved axially with respect to the axis; and a second axially movable actuator (14B), the second actuator (14B) being mechanically connected to the second inner mold segments (12B) or configured so as to move the second inner mold segments (12B) radially with respect to the axis when the second actuator (14B) is moved axially with respect to the axis, **characterized in that**
each of the first and each of the second inner mold segments (12A, 12B) is mechanically constrained from moving into the axial direction; and **in that**
the first actuator (14A) includes a central portion (141A) and plurality of peripheral segment portions (142A), the peripheral segment portions (142A) cooperating with the first inner mold segments (12A) and the central portion (141A) linking the peripheral segment portions (142A) to a first axial piston that is controlled to move in axial direction, the peripheral segment portions (142A) of the first actuator (14A) having slanted radially outer surfaces, which cooperate with conjugately slanted radially inner surfaces of the first inner mold segments (12A); and second actuator (14B) includes a central portion (141B) and plurality of peripheral segment portions (142B) cooperating with the second inner mold segments (12B) and the central portion (141B) linking the peripheral segment portions (142B) to a second axial piston that is controlled to move in axial direction, the peripheral segment portions (142B) of the second actuator (14B) having slanted radially outer surfaces, which cooperate with conjugately slanted radially inner surfaces of the second inner mold segments (12B).

2. The inner mold mechanism of claim 1, wherein each one of the first inner mold segments (12A) comprises a radially inner stem (121A) and a radially outer front body with an arced front surface (122A), wherein the front body has flanges (112A) protruding in azimuthal direction beyond the stem (121A) so as to define recesses between the stem (121A) and the flanges (112A); and/or wherein each one of the second inner mold segments (12B) comprises a radially inner stem (121B) and a radially outer front body with an arced front surface (122B), wherein the front body has flanges (112B) protruding in azimuthal direction beyond the stem (121B) so as to define recesses between the stem (121B) and the flanges (112B).

3. The inner mold mechanism of claim 2, wherein the flanges (112A) of the first inner mold segments and the flanges (112B) of the second inner mold segments are shaped complementarily.

4. The inner mold mechanism of at least one of the previous claims, wherein the first actuator (14A) is connected to the first inner mold segments (12A) by respective one or more first prismatic joints and/or comprises one or more T-shaped sliders cooperating with respective one or more T-shaped grooves, and wherein the second actuator (14B) is connected to the second inner mold segments (12B) by respective one or more second prismatic joints and/or comprises one or more T-shaped sliders cooperating with respective one or more T-shaped grooves.

5. The inner mold mechanism of at least one of the previous claims, wherein the first inner mold segments (12A) are movable between a first retracted position and a first deployed position, wherein the second inner mold segments (12B) are movable between a second retracted position and a second deployed position, wherein, when the first inner mold segments (12A) are in the first deployed position and the second inner mold segments (12B) are in the second deployed position, the first and second inner mold segments (12A, 12B) form together a substantially continuous inner mold surface.

6. The inner mold mechanism of claim 5, wherein the first inner mold segments (12A) have sides with recesses therein and wherein, when the first inner mold segments are in the first retracted position and the second inner mold segments (12B) are in the second retracted position, the second inner mold segments (12B) are further retracted than the first inner mold segments (12A) and the second inner mold segments (12B) are lodged at least partially in the recesses in the sides of the first inner mold segments (12A).

7. The inner mold mechanism of at least one of the previous claims comprising from three to five first inner mold segments (12A) and the same number of second inner mold segments (12B).

8. A mold for curing an annular tire structure, the mold (20) comprising an outer mold mechanism and an inner mold mechanism (10), the outer and inner mold mechanisms defining there between an openable and closable mold cavity for accommodating therein an annular tire structure to be cured, wherein the inner mold mechanism (10) is an inner mold mechanism (10) in accordance with one of the previous claims.

## Patentansprüche

1. Mechanismus in Form einer inneren Form, der zum Formen einer ringförmigen Struktur wie eines Reifens bestimmt ist, wobei der Mechanismus in Form einer inneren Form das Folgende umfasst: erste Segmente einer inneren Form (12A) und zweite Segmente einer inneren Form (12B), wobei die ersten und die zweiten Segmente einer inneren Form in Umfangsrichtung und in Umfangsrichtung um eine Achse des Mechanismus in Form einer inneren Form abwechselnd zueinander angebracht sind; eine erste Betätigungsvorrichtung (14A), die in axialer Richtung verschiebbar ist, wobei die erste Betätigungsvorrichtung (14A) mit den ersten Segmenten einer inneren Form (12A) mechanisch verbunden ist oder derart ausgebildet ist, dass sie die ersten Segmente einer inneren Form (12A) in axialer Richtung relativ zu der Achse verschiebt, wenn die erste Betätigungsvorrichtung (14A) in axialer Richtung relativ zu der Achse verschoben wird; und eine zweite Betätigungsvorrichtung (14B), die in axialer Richtung verschiebbar ist, wobei die zweite Betätigungsvorrichtung (14B) mit den zweiten Segmenten einer inneren Form (12B) mechanisch verbunden ist oder derart ausgebildet ist, dass sie die zweiten Segmente einer inneren Form (12B) in axialer Richtung relativ zu der Achse verschiebt, wenn die erste Betätigungsvorrichtung (14A) in axialer Richtung relativ zu der Achse verschoben wird; **dadurch gekennzeichnet, dass**
jedes der ersten und jedes der zweiten Segmente einer inneren Form (12A, 12B) mechanisch eingeschränkt ist, sich in axialer Richtung zu verschieben; und dass
die erste Betätigungsvorrichtung (14A) einen zentralen Abschnitt (141A) und eine Anzahl von Abschnitten in Form von Umfangssegmenten (142A) aufweist, die mit den ersten Segmenten einer inneren Form (12A) zusammenwirken, und wobei der zentrale Abschnitt (141A) die Abschnitte in Form von Umfangssegmenten (142A) mit einem ersten axialen Kolben verbindet, der derart gesteuert wird, dass er in axialer Richtung verschoben wird; wobei die Abschnitte in Form von Umfangssegmenten (142A) der ersten Betätigungsvorrichtung (14A) geneigte, in der radialen Richtung außen liegende Oberflächen besitzen, die mit konjugierten geneigten, in der radialen Richtung innen liegenden Oberflächen der ersten Segmente einer inneren Form (12A) zusammenwirken; und dass die zweite Betätigungsvorrichtung (14B) einen zentralen Abschnitt (141B) und eine Anzahl von Abschnitten in Form von Umfangssegmenten (142B) aufweist, die mit den zweiten Segmenten einer inneren Form (12B) zusammenwirken, und wobei der zentrale Abschnitt (141B) die Abschnitte in Form von Umfangssegmenten (142B) mit einem zweiten axialen Kolben verbindet, der derart gesteuert wird, dass er in axialer Richtung verschoben wird; wobei die Abschnitte in Form von Umfangssegmenten (142B) der zweiten Betätigungsvorrichtung (14B) geneigte in der radialen Richtung außen liegende Oberflächen besitzen, die mit konjugierten geneigten in der radialen Richtung innen liegenden Oberflächen der zweiten Segmente einer inneren Form (12B) zusammenwirken.

2. Mechanismus in der Form einer inneren Form nach Anspruch 1, wobei jedes der ersten Segmente einer inneren Form (12A) einen in der radialen Richtung innen liegenden Schaft (121A) und einen in der radialen Richtung außen liegenden vorderen Körper umfasst, der eine gewölbte vordere Oberfläche (122A) aufweist; wobei der vordere Körper Flansche (112A) besitzt, die in azimutaler Richtung über den Schaft (121A) derart vorstehen, dass sie Aussparungen zwischen dem Schaft (121A) und den Flanschen (112A) definieren; und/oder wobei jedes der zweiten Segmente einer inneren Form (12B) einen in der radialen Richtung inneren Schaft (121B) und einen in der radialen Richtung äußeren vorderen Körper umfasst, der eine gewölbte vordere Oberfläche (122B) aufweist; wobei der vordere Körper Flansche (112B) besitzt, die in azimutaler Richtung über den Schaft (121B) derart vorstehen, dass sie Aussparungen zwischen dem Schaft (121B) und den Flanschen (112B) definieren.

3. Mechanismus in Form einer inneren Form nach Anspruch 2, wobei die Flansche (112A) der ersten Segmente einer inneren Form und die Flansche (112B) der zweiten Segmente einer inneren Form komplementär ausgebildet sind.

4. Mechanismus in Form einer inneren Form nach mindestens einem der vorhergehenden Ansprüche, wobei die erste Betätigungsvorrichtung (14A) über eine oder mehrere erste jeweilige Dichtungen in prismatischer Form mit den ersten Segmenten einer inneren Form (12A) verbunden ist und/oder einen oder mehrere T-förmige Schieber umfasst, die mit einer oder mehreren entsprechenden T-förmigen Nuten zusammenwirken; und/oder die zweite Betätigungsvorrichtung (14B) über eine oder mehrere zweite jeweilige Dichtungen in prismatischer Form mit den zweiten Segmenten einer inneren Form (12B) verbunden ist und/oder einen oder mehrere T-förmige Schieber umfasst, die mit einer oder mehreren entsprechenden T-förmigen Nuten zusammenwirken.

5. Mechanismus in Form einer inneren Form nach mindestens einem der vorhergehenden Ansprüche, wobei die ersten Segmente einer inneren Form (12A) zwischen einer ersten zurückgezogenen Position und einer ersten ausgefahrenen Position verschiebbar sind; wobei die zweiten Segmente einer inneren Form (12B) zwischen einer ersten zurückgezogenen Position und einer ersten ausgefahrenen Position verschiebbar sind; wobei, wenn sich die ersten Segmente einer inneren Form (12A) in der ersten ausgefahrenen Position befinden und wenn sich die zweiten Segmente einer inneren Form (12B) in der zweiten ausgefahrenen Position befinden, die ersten und die zweiten Segmente einer inneren Form (12A, 12B) zusammen eine im Wesentlichen durchgehende innere Formoberfläche bilden.

6. Mechanismus in Form einer inneren Form nach Anspruch 5, wobei die ersten Segmente einer inneren Form (12A) Seiten besitzen, in denen Ausnehmungen ausgebildet sind; und wobei, wenn die ersten Segmente einer inneren Form (12A) sich in der ersten zurückgezogenen Position befinden und die zweiten Segmente einer inneren Form (12B) sich in der zweiten zurückgezogenen Position befinden, die zweiten Segmente einer inneren Form (12B) weiter zurückgezogen sind als die ersten Segmente einer inneren Form (12A), und die zweiten Segmente einer inneren Form (12B) zumindest teilweise in den Aussparungen aufgenommen sind, die in den Seiten der ersten Segmente einer inneren Form (12A) ausgebildet sind.

7. Mechanismus in Form einer inneren Form nach mindestens einem der vorstehenden Ansprüche, der drei bis fünf erste Segmente einer inneren Form (12A) und die gleiche Anzahl zweiter Segmente einer inneren Form (12B) umfasst.

8. Form zum Vulkanisieren einer Struktur in Form eines ringförmigen Reifens, wobei die Form (20) einen Mechanismus in Form einer äußeren Form und einen Mechanismus in Form einer inneren Form (10) umfasst, wobei die Mechanismen in Form einer äußeren Form und in Form einer inneren Form einen Formhohlraum definieren, der sich öffnen und schließen kann, um eine Struktur in Form eines zu vulkanisierenden ringförmigen Reifens aufzunehmen; wobei der Mechanismus in Form einer inneren Form (10) einen Mechanismus in Form einer inneren Form (10) gemäß einem der vorstehenden Ansprüche darstellt.

## Revendications

1. Mécanisme sous la forme d'un moule interne, qui est destiné au moulage d'une structure annulaire sous la forme d'un bandage, dans lequel le mécanisme sous la forme d'un moule interne comprend : des premiers segments d'un moule interne (12A) et des deuxièmes segments d'un moule interne (12B), dans lequel les premiers et les deuxièmes segments d'un moule interne sont disposés dans la direction circonférentielle et en alternance les uns avec les autres dans la direction circonférentielle autour d'un axe du mécanisme sous la forme d'un moule interne ; un premier dispositif d'actionnement (14A) qui est mobile dans la direction axiale, dans lequel le premier dispositif d'actionnement (14A) est relié par voie mécanique aux premiers segments d'un moule interne (12A) ou est configuré de façon à déplacer les premiers segments d'un moule interne (12A) dans la direction axiale par rapport à l'axe lorsque le premier dispositif d'actionnement (14A) est déplacé dans la direction axiale par rapport à l'axe ; et un deuxième dispositif d'actionnement (14B) qui est mobile dans la direction axiale, dans lequel le deuxième dispositif d'actionnement (14B) est relié par voie mécanique aux deuxièmes segments d'un moule interne (12B) ou est configuré de façon à déplacer les deuxièmes segments d'un moule interne (12B) dans la direction radiale par rapport à l'axe lorsque le deuxième dispositif d'actionnement (14B) est déplacé dans la direction axiale par rapport à l'axe ; **caractérisé en ce que**
chacun des premiers et chacun des deuxièmes segments d'un moule interne (12A, 12B) est contraint par voie mécanique de se déplacer dans la direction axiale ; et **en ce que**
le premier dispositif d'actionnement (14A) englobe une portion centrale (141A) et un certain nombre de portions sous la forme de segments périphériques (142A), dans lequel des portions sous la forme de segments périphériques (142A) coopèrent avec les premiers segments d'un moule interne (12A), et dans lequel la portion centrale (141A) relie les portions sous la forme de segments périphériques (142A) à un premier piston axial qui est commandé pour se déplacer dans la direction axiale; dans lequel les portions sous la forme de segments périphériques (142A) du premier dispositif d'actionnement (14A) possèdent des surfaces inclinées externes dans la direction radiale, qui coopèrent avec des surfaces inclinées de manière conjuguée, interne dans la direction radiale, des premiers segments d'un moule interne (12A) ; et dans lequel le deuxième dispositif d'actionnement (14B) englobe une portion centrale (141B) et plusieurs portions sous la forme de segments périphériques (142B) qui coopèrent avec les deuxièmes segments d'un moule interne (12B), et dans lequel la portion centrale (141B) relie les portions sous la forme de segments périphériques (142B) à un deuxième piston axial qui est commandé pour se déplacer dans la direction axiale, dans lequel les portions sous la forme de segments périphériques (142B) du deuxième dispositif d'actionnement (14B) possèdent des surfaces inclinées externes dans la direction radiale, qui coopèrent avec des surfaces inclinées de manière conjuguée, interne dans la direction radiale, des deuxièmes segments d'un moule interne (12B).

2. Mécanisme sous la forme d'un moule interne selon la revendication 1, dans lequel chacun des premiers segments d'un moule interne (12A) comprend une tige (121A), interne dans la direction radiale, et un corps avant, externe dans la direction radiale, qui présente une surface avant arquée (122A) ; dans lequel le corps avant possède des brides (112A) qui font saillie dans une direction azimutale au-delà de la tige (121A) d'une manière telle qu'ils définissent des évidements entre la tige (121A) et les brides (112A) ; et/ou dans lequel chacun des deuxièmes segments d'un moule interne (12B) comprend une tige (121B), interne dans la direction radiale, et un corps avant, externe dans la direction radiale, qui présente une surface avant arquée (122B) ; dans lequel le corps avant possède des brides (112B) qui font saillie dans une direction azimutale au-delà de la tige (121B) d'une manière telle qu'ils définissent des évidements entre la tige (121B) et les brides (112B).

3. Mécanisme sous la forme d'un moule interne selon la revendication 2, dans lequel les brides (112A) des premiers segments d'un moule interne et les brides (112B) des deuxièmes segments d'un moule interne sont configurées d'une manière complémentaire.

4. Mécanisme sous la forme d'un moule interne selon au moins une des revendications précédentes, dans lequel le premier dispositif d'actionnement (14A) est relié aux premiers segments d'un moule interne (12A) par l'intermédiaire d'un ou de plusieurs premiers joints prismatiques respectifs et/ou comprend un ou plusieurs coulisseaux en forme de T qui coopèrent avec une ou plusieurs rainures respectives en forme de T; et/ou dans lequel le deuxième premier dispositif d'actionnement (14B) est relié aux deuxièmes segments d'un moule interne (12B) par l'intermédiaire d'un ou de plusieurs deuxièmes joints prismatiques respectifs et/ou comprend un ou plusieurs coulisseaux en forme de T qui coopèrent avec une ou plusieurs rainures respectives en forme de T.

5. Mécanisme sous la forme d'un moule interne selon au moins une des revendications précédentes, dans lequel les premiers segments d'un moule interne (12A) sont mobiles entre une première position rétractée et une première position déployée ; dans lequel les deuxièmes segments d'un moule interne (12B) sont mobiles entre une première position rétractée et une première position déployée ; dans lequel, lorsque les premiers segments d'un moule interne (12A) se trouvent dans la première position déployée et lorsque les deuxièmes segments d'un moule interne (12B) se trouvent dans la deuxième position déployée, les premiers et les deuxièmes segments d'un moule interne (12A, 12B) forment ensemble une surface d'un moule interne essentiellement continue.

6. Mécanisme sous la forme d'un moule interne selon la revendication 5, dans lequel les premiers segments d'un moule interne (12A) possèdent des côtés dans lequel sont réalisés des évidements ; et dans lequel, lorsque les premiers segments d'un moule interne (12A) se trouvent dans la première position rétractée et les deuxièmes segments d'un moule interne (12B) se trouvent dans la deuxième position rétractée, les deuxièmes segments d'un moule interne (12B) sont davantage rétractés que les premiers segments d'un moule interne (12B), et les deuxièmes segments d'un moule interne (12B) sont logés au moins en partie dans les évidements qui sont pratiqués dans les côtés des premiers segments d'un moule interne (12A).

7. Mécanisme sous la forme d'un moule interne selon au moins une des revendications précédentes, qui comprend de trois à cinq premiers segments d'un moule interne (12A) et le même nombre de deuxièmes segments d'un moule interne (12B).

8. Moule destiné à la vulcanisation d'une structure sous la forme d'un bandage annulaire, dans lequel le moule (20) comprend un mécanisme sous la forme d'un moule externe et un mécanisme sous la forme d'un moule interne (10), dans lequel les mécanismes sous la forme d'un moule externe et sous la forme d'un moule interne définissent entre eux une cavité de moule qui peut s'ouvrir et se fermer pour que vienne s'y loger une structure sous la forme d'un bandage annulaire qui doit être vulcanisé ; dans lequel le mécanisme sous la forme d'un moule interne (10) représente un mécanisme sous la forme d'un moule interne (10) en conformité avec une des revendications précédentes.
